# EUROPÄISCHE PATENTSCHRIFT

(11) **EP 2 040 419 B1**
(45) Veröffentlichungstag und Bekanntmachung des Hinweises auf die Patenterteilung: **27.07.2011**
(21) Anmeldenummer: 08105320.9
(22) Anmeldetag: 11.09.2008
(51) Int. Cl.: H04L 12/40, G06F 9/445

(54) **Verfahren zum Erzeugen von ablauffähigen Programmcodes**
Method for creating processable program codes
Procédé de production de codes de programme pouvant être traités

(30) Priorität: 18.09.2007 DE 102007044405
(43) Veröffentlichungstag der Anmeldung: 25.03.2009
(73) Patentinhaber: Continental Automotive GmbH, 30165 Hannover (DE)
(72) Erfinder: Heinlein, Marc, 63110, Rodgau (DE)

(56) Entgegenhaltungen:
- DE-A1- 10 123 842
- US-A1- 2004 205 697
- US-A1- 2004 225 876
- US-A1- 2006 070 069

## Beschreibung

### Gebiet der Erfindung

Die vorliegende Erfindung betrifft ein Verfahren zum Erzeugen von ablauffähigen Programmcodes, ein Paar von ablauffähigen Programmcodes zum Betrieb in mobilen Datenverarbeitungssystemen, ein Verfahren zum Steuern eines Datenverarbeitungssystems sowie ein Speichermittel mit derartigen Programmcodes.

### Stand der Technik

Mobile Datenverarbeitungssysteme finden als Steuergeräte Einsatz in Kraftfahrzeugen und umfassen Software-Komponenten für Fahr- und Sicherheitsfunktionen wie z.B. Motor- und Antriebssteuerung, Stabilitätsregelung, Bremsassistenz, Airbag-Auslösung einerseits und für Multimediafunktionen (Infotainment) wie z.B. Telefonie, Navigation, Audio und Video andererseits.

DE 101 23 842 A1, GB 2 413 660 A1 und US 2006/0036805 A1 betreffen derartige Systeme und Anwendungen.

Diese Datenverarbeitungssysteme umfassen üblicherweise einen Permanentspeicher, einen oder mehrere Arbeitsspeicher sowie einen oder mehrere Prozessoren. Im Permanentspeicher sind Programmcodes abgelegt, welche beim Starten des Datenverarbeitungssystems in den Arbeitsspeicher transferiert werden (Aufstartphase bzw. "Bootloading"), um dann von dem oder den Prozessoren verarbeitet zu werden.

Die Anforderungen an die Aufstartzeiten für bestimmte Software-Komponenten wie z.B. solche, die Fahr- und Sicherheitsfunktionen des Kraftfahrzeugs betreffen, liegen in einem sehr niedrigen Bereich, z.B. 100 ms für die CAN-Komponenten (Controller Area Network). Programmcodes für komplexe Anwendungen wie z.B. Navigations- und andere Multimediasysteme haben sehr viel höhere Aufstartzeiten (typisch sind werte von mehr als 500 ms), so dass die geforderten kurzen Aufstartzeiten für die Kfz-Fahr- und Sicherheitskomponenten nicht eingehalten werden können.

Bisher wird dieses Problem gelöst, indem die auszuführenden Software-Komponenten auf Programmcodes für zwei Prozessoren verteilt werden, wobei in einem ersten Programmcode die schnell zu startenden Komponenten zusammengebunden (gelinkt) werden und in einem zweiten Programmcode die langsamer aufstartenden Multimedia-Anwendungen zusammengebunden werden.

Hierzu ist ein zusätzlicher kleiner Prozessor nebst eigenem Arbeitsspeicher in das System integriert, der mit einem kleinen, sehr schnell auf startenden Betriebssystem arbeitet. Auf diesem Prozessor wird dann derjenige Programmcode ausgeführt, der die sehr schnell verfügbaren Komponenten umfasst, während die übrigen Komponenten nebst dem zugehörigen Betriebssystem (z.B. Windows CE) auf dem Haupt-Prozessor ausgeführt werden. Der zusätzliche Prozessor und der zusätzliche Arbeitsspeicher verursachen allerdings Zusatzkosten, was gerade in der Automobilindustrie aufgrund des hohen Kostendrucks als unattraktiv betrachtet wird. Andererseits werden lange Aufstartzeiten für sicherheitsrelevante Software-Komponenten als inakzeptabel empfunden.

Die US 2004/205697 offenbart ein Verfahren für den Einsatz von dem sogenannten Program Overlaying, worin Codesegmente zusammen mit Dazensegmenten zu einem Codesegment gefasst werden, das in ein empfangendes Speichersegment übertragen wird. Der Programmcode wird separiert in einen allgemeinen Code und einen Overlay-Code. Der Overlay-Code wird dann in Übereinstimmung mit der entsprechenden Funktionalität in Segmente aufgespaltet und der Anforderung entsprechend Segmente zu kreieren, die für das empfangende Speichersegment passend sind. Außer einer Wrapper-Datei wird eine Overlay-Control-Datei für jedes Segment erzeugt, Die Wrapper-Dateien und die Linker-Befehle werden dazu benutzt, um eine allgemeine Image-Datei für den Code bzw, die Daten zu erzeugen. Die allgemeine Image-Datei wird dazu gebraucht, um Overlay-Bereiche zu erzeugen, welche dann zusammen in einer Datei verkettet werden. Diese einzelne Datei wird zur Übermittlung der Overlays für einen empfangenden Speicherbereich dann in den Speicher geladen.

### Kurzbeschreibung der Erfindung

Aufgabe der vorliegenden Erfindung ist es, ein verfahren zum Erzeugen von ablauffähigen Programmcodes für ein Datenverarbeitungssystem bereitzustellen, welche innerhalb der geforderten Aufstartzeiten betriebsbereit sind und während des gesamten Betriebs des Datenverarbeitungssystems betriebsbereit bleiben.

Eine weitere Aufgabe ist es, derartige Programmccdes und ein Verfahren zum Steuern einer Datenverarbeitungsvorrichtung sowie ein Speichermittel mit derartigen Programmcodes bereitzustellen.

Diese Aufgaben werden durch die Verfahren bzw. die Programmcodes und Speichermittel gemäß den jeweiligen unabhängigen Ansprüchen gelöst. Vorteilhafte Weiterbildungen der Erfindung sind in den abhängigen Ansprüchen definiert.

Erfindungsgemäß bereitgestellt wird also ein Verfahren zum Erzeugen von lauffähigen Programmcodes aus einer Anzahl von Software-Komponenten, die zum Prozessieren durch ein Datenverarbeitungssystem für ein Kraftfahrzeug bestimmt sind, wobei das Datenverarbeitungssystem dazu ausgelegt ist, in einer ersten Laufzeitumgebung einen ersten Programmcode auszuführen und in einer zweiten Laufzeitumgebung einen zweiten Programmcode auszuführen, wobei im ersten Programmcode diejenigen Software-Komponenten zusammengebunden werden, die in der ersten Laufzeitumgebung auszuführen sind, und im zweiten Programmcode diejenigen Software-Komponenten zusammengebunden werden, die in der zweiten Laufzeitumgebung auszuführen sind, wobei für diejenigen Software-Komponenten, die in beiden Laufzeitumgebungen auszuführen sind, in beiden Programmcodes jeweils die Verwendung eines übereinstimmenden Speicher-Layouts definiert wird.

Vorteilhafterweise Weiterbildungen können folgende Merkmale umfassen.

Die erste Laufzeitumgebung kann ein Bootloader-Kontext sein und die zweite Laufzeitumgebung kann ein Betriebssystem-Kontext sein.

Das Speicher-Layout kann durch Blockgröße und Block-Startadresse eines Blocks im Speicher festegelegt sein.

Vorteilhaft ist weiterhin, wenn in den zweiten Programmcode ein Library-Framework eingebunden wird, das zur Laufzeit des zweiten Programmcodes zumindest eine Startadresse von zumindest einem Speicherblock übernimmt.

Diejenigen Software-Komponenten, die in beiden Laufzeitumgebungen auszuführen sind, können Komponenten der Fahrzeugsteuerung, insbesondere CAN-Bus-Komponenten, umfassen.

Der erste Programmcode kann CAN-Bus-Komponenten sowie Bootloader-Komponenten zum Laden eines Betriebssystems umfassen.

Der zweite Programmcode kann CAN-Bus-Komponenten sowie Multimedia-Komponenten, die unter einem zu ladenden Betriebssystem laufen, umfassen.

Beide Programmcodes können für die Nutzung eines gemeinsamen Speichers erzeugt werden.

Das Betriebssystem kann eine Ladezeit von mehr als 500 ms haben und die CAN-Bus-Komponenten können eine Aufstartzeit in der Größenordnung von 100 ms haben.

Die Speichervorrichtung kann eine flüchtige Speichervorrichtung sein und das Betriebssystem kann aus einer nichtflüchtigen Speichervorrichtung geladen werden.

Das Datenverarbeitungssystem kann einen Prozessor und eine Speichervorrichtung umfassen, mit welchen die Programmcodes ausgeführt werden.

Des Weiteren umfasst die Erfindung ein Paar von Programmcodes, die aus einer Anzahl von Software-Komponenten erzeugt sind, die zum Prozessieren durch ein Datenverarbeitungssystem für ein Kraftfahrzeug bestimmt sind, wobei das Datenverarbeitungssystem dazu ausgelegt ist, in einer ersten Laufzeitumgebung den ersten Programmcode des Paars auszuführen und in einer zweiten Laufzeitumgebung den zweiten Programmcode des Paars auszuführen, wobei im ersten Programmcode diejenigen Software-Komponenten zusammengebunden sind, die in der ersten Laufzeitumgebung auszuführen sind, und im zweiten Programmcode diejenigen Software-Komponenten zusammengebunden sind, die in der zweiten Laufzeitumgebung auszuführen sind, wobei für diejenigen Software-Komponenten, die in beiden Laufzeitumgebungen auszuführen sind, in beiden Programmcodes jeweils die Verwendung eines übereinstimmenden Speicher-Layouts definiert wird.

Weiterhin umfasst die Erfindung ein Speichermittel mit einem Paar von Programmcodes, wie sie oben beschrieben sind.

Des Weiteren umfasst die Erfindung ein Verfahren zum Steuern eines Datenverarbeitungssystems mit einem Paar von Programmcodes wie oben beschrieben, wobei zunächst der erste Programmcode in einer ersten Laufzeitumgebung ausgeführt wird und anschließend der zweite Programmcode in einer zweiten Laufzeitumgebung ausgeführt wird, **dadurch gekennzeichnet, dass** Daten von Software-Komponenten, die durch Software-Komponenten des ersten Programmcodes in der ersten Laufzeitumgebung im Speicher abgelegt werden, an Software-Komponenten des zweiten Programmcodes in der zweiten Laufzeitumgebung übergeben werden, wobei die Daten in einem Speicher gemäß dem übereinstimmenden Speicher-Layout abgelegt werden.

Hierbei können Daten, die für das übereinstimmende Speicher-Layout repräsentativ sind, beim Übergang von der ersten Laufzeitumgebung zu der zweiten Laufzeitumgebung übergeben werden.

Die Erfindung ermöglicht es also, bereits im Bootloader-Kontext die Ausführung derjenigen Software-Komponenten zu beginnen, welche eine geringe Aufstartzeit haben. Diese Software-Komponenten müssen also nicht auf diejenigen mit längeren Aufstartzeiten "warten". Aufgrund des gemeinsamen Speicher-Layouts werden der bis zum Übergang in den Betriebssystem-Kontext eingenommene Zustand und die Daten der bereits gestarteten Software-Komponenten an die entsprechenden Software-Komponenten im Betriebssystem-Kontext übergeben. Denn die im Betriebssystemkontext startenden Software-Komponenten können auf die im Arbeitsspeicher bereits vorhandenen Daten zugreifen und können somit die im vorherigen Kontext begonnene Verarbeitung weiterführen. Somit erübrigt sich ein Neustart dieser Software-Komponenten im Betriebssystem-Kontext. Die Funktionalität steht bereits kurze Zeit nach Start des Bootloaders ohne substantielle spätere Unterbrechung beim Übergang in den Betriebssystem-Kontext zur Verfügung.

Des Weiteren erübrigt sich ein zusätzlicher Prozessor für die Komponenten mit geringen Aufstartzeiten.

Weil erfindungsgemäß das Link-and-Locate-Werkzeug der Entwicklungsumgebung für die Programmcodes zur Erzeugung des gemeinsamen Speicher-Layouts genutzt wird, wird ein manueller Eingriff in den Quellcode der betreffenden Software-Komponenten vermieden. Hierdurch kann eine möglicherweise vorhandene Zertifizierung der betreffenden Software-Komponente erhalten bleiben, auch wenn das Speicher-Layout geändert wird. Des Weiteren wird das Risiko vermieden, dass sich durch Änderungen des Programmcodes Fehler einschleichen.

### Kurzbeschreibung der Zeichnung

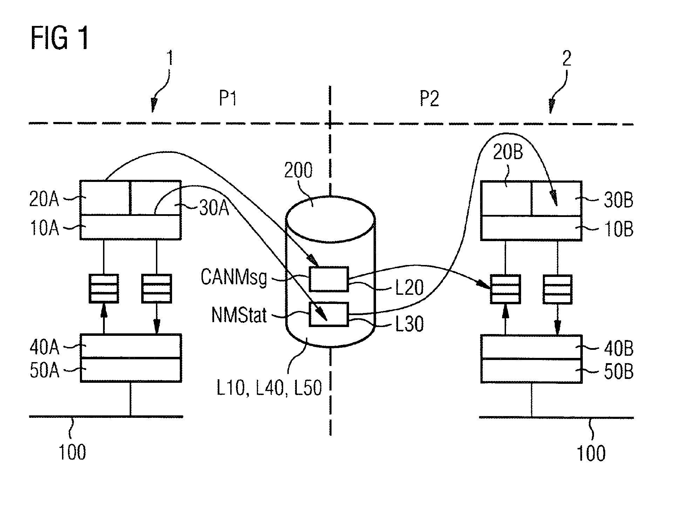

Die Erfindung wird an Hand der Zeichnung näher beschrieben. In der Zeichnung zeigt
- Fig. 1: ein Blockschaltbild eines erfindungsgemäßen Daten- verarbeitungssystems.

### Ausführungsbeispiel

Unter Bezugnahme auf Fig. 1 wird die Funktionsweise eines Datenverarbeitungssystems beschrieben, welches die erfindungsgemäß erzeugten Programmcodes P1, P2 ausführt. Beim Start des Datenverarbeitungssystems befindet sich das Datenverarbeitungssystem in der ersten Laufzeitumgebung, dem Bootloader-Kontext 1. Im Bootloader-Kontext 1 werden die zeitkritischen Software-Komponenten gestartet, also z.B. diejenigen, welche die Fahr- und Sicherheitsfunktionen des Kraftfahrzeugs bereitstellen. Zu diesen gehören das CAN-Bus-Netzwerk 100 mit den zugehörigen Komponenten, also z.B. CAN-Dispatcher 10A, Applikationsnachrichtenverarbeitung 20A, Netzwerk-Management 30A, CAN-Bus-Treiber 40A, CAN-Hardware-Abtraktions-Layer 50A. Diese Software-Komponenten nutzen in der Laufzeitumgebung 1 den Speicher 200 gemeinsam zum Ablegen von Daten, wie z.B. Nachrichten CANMsg (Messages) und Zustände NMStat des Netzwerk-Managements 30A. Sobald das Betriebssystem geladen ist, können die zusätzlichen Software-Komponenten des Multimedia-Bereichs auf dessen Basis ausgeführt werden. Der entsprechende zweite Programmcode umfasst also neben den Software-Komponenten für die Fahr- und Sicherheitsfunktionen, die bereits im Bootloader-Kontext 1 ausgeführt wurden, Software-Komponenten wie z.B. Navigationsgeräte, Audio- und Videosysteme sowie Mobiltelefone. Des Weiteren umfasst der Programmcode P2 das Betriebssystem, unter welchem die Software-Komponenten laufen, z.B. Windows CE. Die Software-Komponenten des Programmcodes 2 nutzen den Speicher 200 ebenfalls gemeinsam. Weil das Speicher-Layout L10, L20, L30, L40, L50 derjenigen Software-Komponenten, die in beiden Laufzeitumgebungen ausgeführt werden, übereinstimmt, können diese Software-Komponenten ohne Neustart im Betriebssystem-Kontext 2 weiterlaufen. Sie können also die zuvor im Bootloader-Kontext 1 im Speicher 200 abgelegten Daten und Zustände übernehmen und weiterverarbeiten.

Dies bedeutet, dass etwa das CAN-Netzwerk-Management 30B den Netzwerk-Management-Zustand aus dem Speicher 200 übernimmt. Ebenso können im Speicher 200 abgelegte CAN-Nachrichten durch die Applikationsnachrichtenverarbeitung 20B übernommen werden. Die durch diese Software-Komponenten bereitgestellte Funktionalität bleibt also nahtlos zwischen den beiden Kontexten 1 und 2 erhalten.

Erfindungsgemäß wird dies dadurch erreicht, dass beim Zusammenlinken der (kompilierten) Software-Komponenten zu dem ausführbaren Programmcode P1 für den Bootloader-Kontext 1 einerseits und zu dem Programmcode P2 für den Betriebssystem-Kontext 2 andererseits ein gemeinsames Speicher-Layout L10, L20, ... L50 für die Nutzung des Speichers 200 definiert wird, und zwar für diejenigen Software-Komponenten, welche in beiden Kontexten 1, 2 ausgeführt werden.

Die Definition des Speicher-Layouts L10, L20, ..., L50 umfasst die Struktur des von der jeweiligen Software-Komponenten benötigten Blocks im Speicher 200 und die Startadresse des jeweiligen Blocks im Speicher.

Der Bootloader-Kontext 1 hat üblicherweise ein statisches Speicher-Layout, welches beim Linken vollständig eingestellt werden kann. Hingegen wird im Betriebssystem-Kontext 2 üblicherweise ein dynamisches Speicher-Layout verwendet, also eines, das erst zur Laufzeit des Programmcodes vollständig definiert wird. Dynamisch definiert werden hierbei die Startadressen der Blöcke im Speicher, die Blockgröße und -struktur hingegen wird beim Linken bereits vorgegeben.

Um die Nutzung eines übereinstimmenden Speicher-Layouts im Programmcode 2 einzustellen, wird beim Zusammenlinken der Software-Komponenten für den Betriebssystem-Kontext 2 die Struktur der betreffenden Speicherblöcke definiert. Dies geschieht durch Einbinden einer Datei, welche die relevanten Definitionsdaten enthält. Damit zur Laufzeit die entsprechende Startadresse übernommen werden kann, werden entsprechende Programmkomponenten (aus einem Library-Framework) mit eingelinkt. Diese Programmkomponenten sorgen dann beim Starten des Betriebssystemkontextes 2 dafür, dass die Startadressen vom Bootloader-Kontext 1 übernommen werden, indem sie die Definitionsdaten lesen.

So erzeugt, benutzen die Software-Komponenten 10A, 10B zur Laufzeit also das übereinstimmende Speicher-Layout L10 und die Software-Komponenten 20A, 20B das Speicher-Layout L20, usw.

Der erste Programmcode P1 zur Ausführung in der ersten Laufzeitumgebung 1 bildet mit dem zweiten Programmcode P2 zur Ausführung in der Laufzeitumgebung 2 ein Paar.

Bei der Ausführung des Programmcodes P1 wird der Programmcode P2 in der Laufzeitumgebung 1 geladen. Sobald der Programmcode P2 geladen ist, stoppt die Ausführung des Programmcodes 1, und der Programmcode 2 wird gestartet, löst somit die Ausführung des Programmcodes 1 nahtlos ab, denn die Software-Komponenten, die in beiden Laufzeitumgebungen 1, 2 laufen, übergeben einander die Daten.

Die Definition des Speicher-Layouts wird, wie zuvor erwähnt, beim Erzeugen des ausführbaren Programmcodes, also beim Verlinken der kompilierten Darstellungen, angelegt. Weil hierzu der Entwurfs-Quellcode der Software-Komponenten nicht angetastet werden muss, werden etwaige Fehler beim Modifizieren von funktionierenden Software-Komponenten vermieden. Des Weiteren können möglicherweise vorhandene Zertifizierungen der einmal programmierten Software-Komponenten erhalten bleiben. Die Speicher-Layouts werden selbstverständlich in Abhängigkeit des betreffenden Datenverarbeitungssystems, auf welchem der Programmcode ausgeführt werden soll, gebildet.

## Patentansprüche

1. Verfahren zum Erzeugen von lauffähigen Programmcodes (P1, P2) aus einer Anzahl von Software-Komponenten (10A, 20A, ..., 50A; 10B, 20B, ..., 50B), die zum Prozessieren durch ein Datenverarbeitungssystem für ein Kraftfahrzeug bestimmt sind, wobei das Datenverarbeitungssystem dazu ausgelegt ist, in einer ersten Laufzeitumgebung (1) einen ersten Programmcode (P1) auszuführen und in einer zweiten Laufzeitumgebung (2) einen zweiten Programmcode (P2) auszuführen, wobei im ersten Programmcode (P1) diejenigen Software-Komponenten (10A, 20A, ..., 50A) zusammengebunden werden, die in der ersten Laufzeitumgebung (1) auszuführen sind, und im zweiten Programmcode (P2) diejenigen Software-Komponenten (10B, 20B, ..., 50B) zusammengebunden werden, die in der zweiten Laufzeitumgebung (2) auszuführen sind,
**dadurch gekennzeichnet, dass**
für diejenigen Software-Komponenten (10A, 20A, ..., 50A; 10B, 20B, ..., 50B), die in beiden Laufzeitumgebungen (1, 2) auszuführen sind, in beiden Programmcodes (P1, P2) jeweils die Verwendung eines übereinstimmenden Speicher-Layouts (L10, L20, ..., L50) definiert wird.

2. Verfahren gemäß Anspruch 1, **dadurch gekennzeichnet**, die erste Laufzeitumgebung (1) ein Bootloader-Kontext ist und die zweite Laufzeitumgebung (2) ein Betriebssystem-Kontext ist.

3. Verfahren gemäß einem der vorherigen Ansprüche, **dadurch gekennzeichnet, dass** das Speicher-Layout (L10, L20, L30, ..., L50) durch Blockgröße und Block-Startadresse eines Blocks im Speicher festegelegt wird.

4. Verfahren gemäß Anspruch 2, **dadurch gekennzeichnet, dass** in den zweiten Programmcode (P2) ein Library-Framework eingebunden wird, das zur Laufzeit des zweiten Programmcodes (P2) zumindest eine Startadresse von zumindest einem Speicherblock übernimmt.

5. Verfahren gemäß einem der vorherigen Ansprüche, **dadurch gekennzeichnet, dass** diejenigen Software-Komponenten (10A, 20A, ..., 50A; 10B, 20B, ..., 50B), die in beiden Laufzeitumgebungen auszuführen sind, Komponenten der Fahrzeugsteuerung, insbesondere CAN-Bus-Komponenten, umfassen.

6. Verfahren gemäß einem der vorherigen Ansprüche, **dadurch gekenntzeichnet,** dass der erste Programmcode (P1) CAN-Bus-Komponenten sowie Bootloader-Komponenten zum Laden eines Betriebssystems umfasst.

7. Verfahren gemäß einem der vorherigen Ansprüche, **dadurch gekennzeichnet, dass** der zweite Programmcode (2) CAN-Bus-Komponenten sowie Multimedia-Komponenten, die unter einem zu ladenden Betriebssystem laufen, umfasst.

8. Verfahren gemäß einem der vorherigen Ansprüche, **dadurch gekennzeichnet, dass** beide Programmcodes (P1, P2) für die Nutzung eines gemeinsamen Speichers (200) erzeugt werden.

9. Verfahren gemäß einem der vorherigen Ansprüche, **dadurch gekennzeichnet, dass** das Betriebssystem eine Ladezeit von mehr als 500 ms hat und die CAN-Bus-Komponenten eine Aufstartzeit in der Größenordnung von 100 ms haben.

10. Verfahren gemäß einem der vorherigen Ansprüche, **dadurch gekennzeichnet, dass** das die Speichervorrichtung eine flüchtige Speichervorrichtung ist und das Betriebssystem aus einer nichtflüchtigen Speichervorrichtung geladen wird.

11. Verfahren gemäß einem der vorherigen Ansprüche, **dadurch gekennzeichnet, dass** das Datenverarbeitungssystem einen Prozessor und eine Speichervorrichtung umfasst, mit welchen die Programmcodes ausgeführt werden.

12. Paar von Programmcodes (P1, P2), die aus einer Anzahl von Software-Komponenten (10A, 20A, ..., 50A; 10B, 20B, ..., 50B) erzeugt sind, die zum Prozessieren durch ein Datenverarbeitungssystem für ein Kraftfahrzeug bestimmt sind, wobei das Datenverarbeitungssystem dazu ausgelegt ist, in einer ersten Laufzeitumgebung (1) den ersten Programmcode (P1) des Paars auszuführen und in einer zweiten Laufzeitumgebung (2) den zweiten Programmcode (P2) des Paars auszuführen, wobei im ersten Programmcode (P1) diejenigen Software-Komponenten (10A, 20A, ..., 50A) zusammengebunden sind, die in der ersten Laufzeitumgebung (1) auszuführen sind, und im zweiten Programmcode (P2) diejenigen Software-Komponenten (10B, 20B, ..., 50B) zusammengebunden sind, die in der zweiten Laufzeitumgebung (2) auszuführen sind, **dadurch gekennzeichnet, dass** für diejenigen Software-Komponenten (10A, 20A, ..., 50A; 10B, 20B, ..., 50B), die in beiden Laufzeitumgebungen (1, 2) auszuführen sind, in beiden Programmcodes (P1, P2) jeweils die Verwendung eines übereinstimmenden Speicher-Layouts (L10, L20, ..., L50) definiert wird.

13. Speichermittel (200) mit einem Paar von Programmcodes gemäß Anspruch 12.

14. Verfahren zum Steuern eines Datenverarbeitungssystems mit einem Paar von Programmcodes (P1, P2) gemäß Anspruch 12, wobei zunächst der erste Programmcode (P1) in einer ersten Laufzeitumgebung (1) ausgeführt wird und anschließend der zweite Programmcode (P2) in einer zweiten Laufzeitumgebung (2) ausgeführt wird, **dadurch gekennzeichnet, dass** Daten von Software-Komponenten (10A, 20A, ..., 50A), die durch Software-Komponenten des ersten Programmcodes (P1) in der ersten Laufzeitumgebung (1) im Speicher abgelegt werden, an Software-Komponenten (10B, 20B, ..., 50B)des zweiten Programmcodes (P2) in der zweiten Laufzeitumgebung (2) übergeben werden, wobei die Daten in einem Speicher (200) gemäß dem übereinstimmenden Speicher-Layout (L10, L20, ..., L50) abgelegt werden.

15. Verfahren gemäß Anspruch 14, **dadurch gekennzeichnet, dass** Daten, die für das übereinstimmende Speicher-Layout (L10, L20, ..., L50) repräsentativ sind, beim Übergang von der ersten Laufzeitumgebung (1) zu der zweiten Laufzeitumgebung (2) übergeben werden.

## Claims

1. Method for producing executable program codes (P1, P2) from a number of software components (10A, 20A, ..., 50A; 10B, 20B, ..., 50B) which are intended for processing by a data processing system for a motor vehicle, wherein the data processing system is designed to execute a first program code (P1) in a first runtime environment (1) and to execute a second program code (P2) in a second runtime environment (2), wherein the first program code (P1) interconnects those software components (10A, 20A, ..., 50A) which are to be executed in the first runtime environment (1), and the second program code (P2) interconnects those software components (10B, 20B, ..., 50B) which are to be executed in the second runtime environment (2),
**characterized in that**
for those software components (10A, 20A, ..., 50A; 10B, 20B, ..., 50B) which are to be executed in both runtime environments (1, 2), both program codes (P1, P2) respectively define the use of a consistent memory layout (L10, L20, ..., L50).

2. Method according to Claim 1, **characterized in that** the first runtime environment (1) is a bootloader context and the second runtime environment (2) is an operating system context.

3. Method according to either of the preceding claims, **characterized in that** the memory layout (L10, L20, L30, ..., L50) is stipulated by block size and block start address for a block in the memory.

4. Method according to Claim 2, **characterized in that** the second program code (P2) incorporates a library framework which accepts at least one start address from at least one memory block at the runtime of the second program code (P2).

5. Method according to one of the preceding claims, **characterized in that** those software components (10A, 20A, ..., 50A; 10B, 20B, ..., 50B) which are to be executed in both runtime environments comprise components of the vehicle controller, particularly CAN bus components.

6. Method according to one of the preceding claims, **characterized in that** the first program code (P1) comprises CAN bus components and also bootloader components for loading an operating system.

7. Method according to one of the preceding claims, **characterized in that** the second program code (2) comprises CAN bus components and also multimedia components which run under an operating system that is to be loaded.

8. Method according to one of the preceding claims, **characterized in that** both program codes (P1, P2) are produced for the use of a common memory (200).

9. Method according to one of the preceding claims, **characterized in that** the operating system has a loading time of more than 500 ms and the CAN bus components have a startup time in the order of 100 ms.

10. Method according to one of the preceding claims, **characterized in that** the memory apparatus is a volatile memory apparatus and the operating system is loaded from a nonvolatile memory apparatus.

11. Method according to one of the preceding claims, **characterized in that** the data processing system comprises a processor and a memory apparatus which are used to execute the program codes.

12. Pair of program codes (P1, P2) which are produced from a number of software components (10A, 20A, ..., 50A; 10B, 20B, ..., 50B) which are intended for processing by a data processing system for a motor vehicle, wherein the data processing system is designed to execute the first program code (P1) from the pair in a first runtime environment (1) and to execute the second program code (P2) from the pair in a second runtime environment (2), wherein the first program code (P1) interconnects those software components (10A, 20A, ..., 50A) which are to be executed in the first runtime environment (1), and the second program code (P2) interconnects those software components (10B, 20B, ..., 50B) which are to be executed in the second runtime environment (2),
**characterized in that**
for those software components (10A, 20A, ..., 50A; 10B, 20B, ..., 50B) which are to be executed in both runtime environments (1, 2), both program codes (P1, P2) respectively define the use of a consistent memory layout (L10, L20, ..., L50).

13. Memory means (200) having a pair of program codes according to Claim 12.

14. Method for controlling a data processing system having a pair of program codes (P1, P2) according to Claim 12, wherein first of all the first program code (P1) is executed in a first runtime environment (1) and then the second program code (P2) is executed in a second runtime environment (2), **characterized in that** data from software components (10A, 20A, ..., 50A) which are stored in the memory by software components of the first program code (P1) in the first runtime environment (1) are transferred to software components (10B, 20B, ..., 50B) of the second program code (P2) in the second runtime environment (2), wherein the data are stored in a memory (200) in accordance with the consistent memory layout (L10, L20, ..., L50).

15. Method according to Claim 14, **characterized in that** data which are representative of the consistent memory layout (L10, L20, ..., L50) are transferred upon the transition from the first runtime environment (1) to the second runtime environment (2).

## Revendications

1. Procédé de production de codes (P1, P2) de programme pouvant être traités à partir d'un certain nombre de composants (10A, 20A, ..., 50A; 10B, 20B, ..., 50B) de logiciel, qui sont destinés au traitement par un système informatique pour un véhicule automobile, le système informatique étant conçu pour effectuer, dans un premier environnement (1) de temps de traitement, un premier code (P1) de programme et, dans un deuxième environnement (2) de temps de traitement, un deuxième code (P2) de programme, dans lequel, dans le premier code (P1) de programme, les composants (10A, 20A, ..., 50A) de logiciel, qui doivent être exécutés dans le premier environnement (1) de temps de traitement, sont reliés, et, dans le deuxième code (P2) de programme, les composants (10B, 20B, ..., 50B) de logiciel qui doivent être exécutés dans le deuxième environnement (2) de temps de traitement sont reliés,
**caractérisé en ce que**,
pour les composants (10A, 20A, ..., 50A; 10B, 20B, ..., 50B) de logiciel, qui doivent être exécutés dans les deux environnements (1, 2) de temps de traitement, l'utilisation d'un layout (L10, L20, ..., L50) de mémoire en coïncidence est défini dans les deux codes (P1, P2) de programme.

2. Procédé suivant la revendication 1, **caractérisé en ce que** le premier environnement (1) de temps de traitement est un contexte boot-loader et l'environnement (2) de temps de traitement est un contexte de service.

3. Procédé suivant l'une des revendications précédentes, **caractérisé en ce que** le layout (L10, L20, L30, ..., L50) de mémoire est fixé dans la mémoire par des grandeurs de bloc et par des adresses de début d'un bloc.

4. Procédé suivant la revendication 2, **caractérisé en ce que** dans le deuxième code (P2) de programme est incorporé un library-framework, qui prend en charge, pour le temps de traitement du deuxième code (P2) de programme, au moins une adresse de début d'au moins un bloc de mémoire.

5. Procédé suivant l'une des revendications précédentes, **caractérisé en ce que** les composants (10A, 20A, ..., 50A; 10B, 20B, ..., 50B) de logiciel, qui doivent être exécutés dans les deux environnements de temps de traitement, comprennent des composants de la commande du véhicule, notamment des composants de CAN-Bus.

6. Procédé suivant l'une des revendications précédentes, **caractérisé en ce que** le premier code (P1) de programme comprend des composants de CAN-Bus, ainsi que des composants bootloader, pour le chargement d'un système de service.

7. Procédé suivant l'une des revendications précédentes, **caractérisé en ce que** le deuxième code (P2) de programme comprend des composants CAN-Bus ainsi que des composants multimédia, qui passent sous un système de service à charger.

8. Procédé suivant l'une des revendications précédentes, **caractérisé en ce que** les deux codes (P1, P2) de programme sont produits pour l'utilisation d'une mémoire (200) commune.

9. Procédé suivant l'une des revendications précédentes, **caractérisé en ce que** le système de service a une durée de chargement de plus de 500 ms et les composants CAN-Bus ont une durée de démarrage de l'ordre de grandeur de 100 ms.

10. Procédé suivant l'une des revendications précédentes, **caractérisé en ce que** le dispositif de mémoire est un dispositif de mémoire non rémanent et le système de service est chargé à partir d'un dispositif de mémoire rémanent.

11. Procédé suivant l'une des revendications précédentes, **caractérisé en ce que** le système informatique comprend un processeur et un dispositif de mémoire, par lesquels les codes de programme sont exécutés.

12. Paire de codes (P1, P2) de programme, qui sont produits à partir d'un nombre de composants (10A, 20A, ..., 50A; 10B, 20B, ..., 50B) de logiciel, qui sont destinés au traitement par un système informatique pour un véhicule automobile, le système informatique étant conçu pour exécuter, dans un premier environnement (1) de temps de traitement, le premier code (P1) de programme de la paire et, dans un deuxième environnement (2) de temps de traitement, le deuxième code (P2) de programme de la paire, les composants (10A, 20A, ..., 50A) de logiciel, qui doivent être exécutés dans le premier environnement (1) de temps de traitement, étant rassemblés dans le premier code (P1) de programme et les composants (10B, 20B, ..., 50B) de logiciel, qui doivent être exécutés dans le deuxième environnement (2) de temps de traitement, étant reliés dans le deuxième code (P2) de programme,
**caractérisée en ce que**
pour les composants (10A, 20A, ..., 50A; 10B, 20B, ..., 50B) de logiciel, qui doivent être exécutés dans les deux environnements (1, 2) de temps de traitement, l'utilisation d'un layout (L10, L20, ..., L50) de mémoire en coïncidence est définie dans les deux codes (P1, P2) de programme.

13. Moyen (200) de mémoire ayant une paire de codes de programme suivant la revendication 12.

14. Procédé de commande d'un système informatique ayant une paire de codes (P1, P2) suivant la revendication 12, dans lequel on exécute d'abord le premier code (P1) de programme dans un premier environnement (1) de temps de traitement et on exécute le deuxième code (P2) de programme dans un deuxième environnement (2) de temps de traitement, **caractérisé en ce qu'**on transmet à des composants (10A, 20A, ..., 50A) de logiciel du deuxième code (P2) de programme, dans le deuxième environnement (2) de temps de traitement, des données de composants (10A, 20A, ..., 50A) de logiciel, qui sont mémorisés dans la mémoire par des composants de logiciel du premier code (P1) de programme dans le premier environnement (1) de temps de traitement, les données étant mémorisées dans une mémoire (200) suivant le layout (L10, L20, ..., L50) de mémoire en coïncidence.

15. Procédé suivant la revendication 14, **caractérisé en ce que** des données, qui sont représentatives du layout (L10, L20, ..., L50) de mémoire en coïncidence, sont transmises lors du passage du premier environnement (1) de temps de traitement au deuxième environnement (2) de temps de traitement.
